## Europäisches Patentamt

## European Patent Office

## Office européen des brevets

(11) Veröffentlichungsnummer: **0 132 457**
**B1**

(12) # EUROPÄISCHE PATENTSCHRIFT

(45) Veröffentlichungstag der Patentschrift:
**15.11.89**

(51) Int. Cl.⁴: **B 05 B 7/04**

(21) Anmeldenummer: **83106368.8**

(22) Anmeldetag: **25.06.83**

(54) **Teilesatz für Mehrkomponentenerzeugnisse.**

(30) Priorität: **06.07.83 US 512029**

(43) Veröffentlichungstag der Anmeldung:
**13.02.85 Patentblatt 85/7**

(45) Bekanntmachung des Hinweises auf die Patenterteilung:
**15.11.89 Patentblatt 89/46**

(84) Benannte Vertragsstaaten:
**BE DE FR GB IT LU NL SE**

(56) Entgegenhaltungen:
**US-A-2 864 534**
**US-A-3 559 890**
**US-A-3 620 414**

(73) Patentinhaber: **Miczka, Lothar, Alcazaba 741,
Marbella (ES)**

(72) Erfinder: **Farrey, Merlyn F., 60 East York Street,
Summit County Akron, Ohio 44310 (US)**

(74) Vertreter: **Herrmann- Trentepohl, Werner, Dipl.-
Ing., Schaeferstrasse 18, D-4690 Herne 1 (DE)**

LIBER, STOCKHOLM 1989

**Beschreibung**

Die Erfindung betrifft einen Teilesatz gemäß dem Oberbegriff des Anspruchs 1.

Ein Teilesatz, welcher zwei mit Schlauchen versehene Druckdosen miteinander verbindet, ist bereits bekannt (US-A-3 559 890). Diese besteht aus einer mit der Hand erfaßbaren Transportklammer und weist für zwei kippbare Ventile einen Ventilsupport und eine Abgabedüse auf. Der Ventilsupport verbindet die Abgabeventile mit der Klammer und bildet je ein Gehause mit zwei nach unten gerichteten Öffnungen, an die sich Schläuche anschließen lassen. Der Support hat außerdem einen Abzugshahn, mit dem sich die beiden Kippventile verkippen und dadurch gleichzeitig öffnen lassen.

Bekannt ist ferner eine Halterung (US-A-3 620 414) mit einem Handgriff, der zum gleichzeitigen Herstellen von Öffnungen in mehreren Druckdosen und zur Steuerung des Ausflusses durch ein gemeinsames Verbindungsrohr mit einem Ventil dient. Dieses Rohr ist über den Druckdosen und unter einem festen T-förmigen Bügel beweglich angeordnet. Der Handgriff sitzt auf einer Welle mit einer Spindel, die in einem Innengewinde des Bügels läuft und auf das Verbindungsrohr drückt, in dem die Mischung der durch die Öffnungen der Druckdosen austretenden flüssigen Komponenten stattfindet.

Der Teilesatz gemäß der Erfindung ermöglicht bei Polyurethanschäumen, deren untereinander reagierende Komponenten bzw. Bestandteile in zwei zylinderischen Dosen unter Druck stehen bessere Wirkungen, die sich dann ergeben, wenn man diese Druckdosen mit dem Ventil nach unten halt. Im Prinzip werden die Einzelteile der Halterung aus bekannten Kunststoffen, welche eine hinreichende Standdauer gewährleisten und relativ geringe Kosten verursachen, gefertigt. Gegen Ende eines Arbeitstages oder nach Vollendung der Arbeiten an einer Isolierung kann die erfindungsgemäße Halterung weggeworfen werden oder sie läßt sich nach einer Reinigung wieder verwenden.

Der Erfindung liegt daher die Aufgabe zugrunde, einen Teilesatz der eingangs beschriebenen Art zu schaffen, welcher leichter ist und daher besser getragen werden kann und dabei exakt und zuverlässig die für die praktische Verwendung chemisch miteinander reagierender Komponenten, als Voraussetzung zu betrachtenden volumetrischen Verhältnisse einhält, wie sie bei der Ausgabe von Zweikomponenten-Polyurethanschäumen verlangt werden, wobei in den beiden die Schaumkomponenten unter Druck enthaltenden und mit den Ausgabeventilen verschlossenen Dosen außerdem je nach Rezeptur zur Stabilisierung der Emulsion Schäumer, feuerhemmende Substanzen und Katalysatoren enthalten sein können.

Die Erfindung bietet danebem die Vorteile, die sich mit einer Halterung verbinden, welche aus für die Massenproduktion geeigneten, bekannten sowie verfügbaren und in wirtschaftlichen Formprozessen verarbeitbaren Kunststoffen gefertigt wird und nach einer Reinigung wieder verwendet oder wegen ihrer geringen Kosten einfach weggeworfen wird.

Die gestellte Aufgabe wird mit den kennzeichnenden Merkmalen des Anspruchs 1 sowie des Anspruchs 2 gelöst. Zweckmäßige Ausführungsformen der Erfindung ergeben sich aus den abhängigen Ansprüchen.

Die Einzelheiten, weiteren Merkmale und andere Vorteile der Erfindung ergeben sich aus der Beschreibung im Zusammenhang mit den Zeichnungen.

Es zeigen

Fig. 1　in perspektivischer Ansicht eine erste Ausführungsform des Teilesatzes gemäß der Erfindung;

Fig. 2　eine Seitenansicht und teilweise im Schnitt den Gegenstand der Fig. 1;

Fig. 3　in der Fig. 2 entsprechender Darstellung eine zweite Ausführungsform der Erfindung;

Fig. 4　eine vergrößerte Darstellung eines nach außen vorstehenden Druckdosenventils im wesentlichen längs der Linie IV - IV der Fig. 2;

Fig. 5　einen Teilschnitt durch eine bekannte Spritzpistole, welche einen Bestandteil des Teilesatzes gemäß der Erfindung bilden kann;

Fig. 6　in der Fig. 3 entsprechender Darstellung eine weiter abgeänderte Ausführungsform der Erfindung;

Fig. 7　einen Schnitt längs der Linie VII - VII der Fig. 6;

Fig. 8　eine Draufsicht auf die Unterseite der Bügelarme bei der Ausführungsform der Fig. 6 und 7 längs der Schnittlinie VIII - VIII der Fig. 6 und

Fig. 9　eine abgeänderte Ausführungsform der Spritzpistole im Längsschnitt und in Draufsicht.

Der Teilesatz gemäß der Erfindung umfaßt eine Halterung 10 für zwei mit Flüssiggas gefüllte Druckdosen die Schaumkomponenten enthalten. Jede Druckdose 11 hat ein nach außen vorstehendes Abgabeventil 12, an das das zur Einspeisung dienende Ende einer bestimmten Lange eines flexiblen Schlauches 14 angeschlossen wird. Das Abgabeende jedes Schlauches 14 kann an einer Abgabedüse 15 angeschlossen werden.

Die Halterung 10 weist ferner eine Zwinge mit Zwingenbacken 16/T und 16/B auf, die das Deckel- bzw. Bodenende 11/T und 11/B der Druckdosen 11 erfassen und diese nebeneinander und parallel zueinander halten. Wie dargestellt, hat jede Zwingenbacke 16 zwei kreisformige Hinterschneidungen 17 zur kraft- und formschlüssigen Verbindung mit Bordrändern 18/T und 18/B der Druckdosen 11. Zwischen den Hinterschneidungen 17 liegt in jeder Zwinge 16 eine mittlere Bohrung 19.

Zu der Halterung 10 gehört ferner ein T-förmiger Bügel 20, der eine vorstehende Hülse 21 mit einer Aussparung 22 aufweist. Die Länge der Hülse 21 kann so gewählt werden, daß ihre Bewegung in Richtung auf die Zwingenbacke 16/T, wie weiter unten beschrieben, einen festen Anschlag findet. An der Hülse 20 befinden sich außerdem seitlich vorstehende, feststehende Arme 23 zur Betätigung jeweils eines Druckdosenventiles 12.

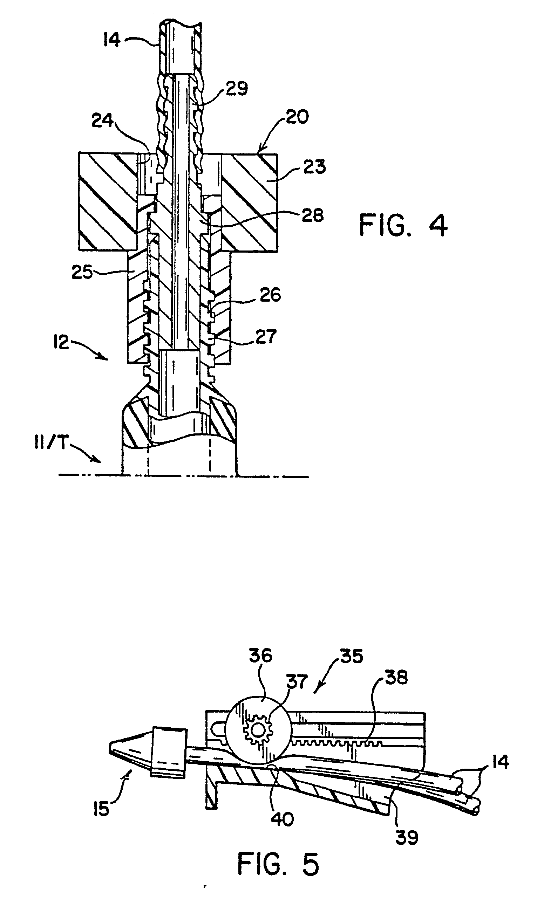

Wie sich vor allem aus der Fig. 4 ergibt, ist in jedem zur Betätigung eines Ventiles dienenden Arm 23 eine orthogonale Bohrung 24 angebracht, die zur Aufnahme und Befestigung des Flansches einer Ventilbetätigungshülse 25 dient, die mit einem Hilfsgewinde 26 mit dem Gehäuse 27 des betreffenden Druckdosenventiles 12 verbunden ist. Dieses Ventilgehäuse 27 umschließt eine Stange 28, die an einem Fitting 29 zur Verbindung mit dem Anfangsende einer der Schlauchlängen 14 endet.

Schließlich gehört zu dem Teilesatz 10 eine allgemein mit 30 bezeichnete Handhabe auf einer Welle 31. Die Welle 31 der Handhabe verläuft koaxial durch die mittleren Aussparungen 19 und die Hülsenbohrung 22.

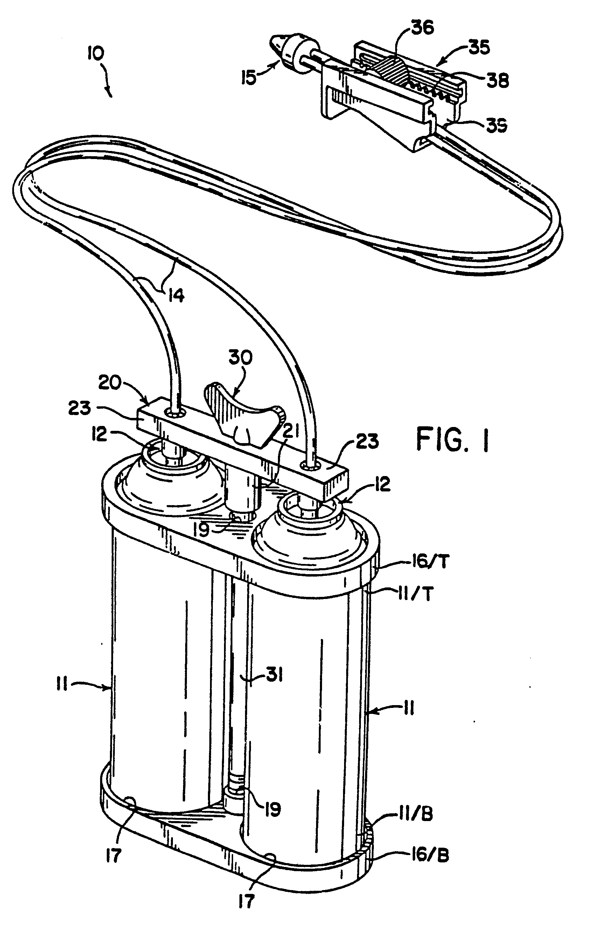

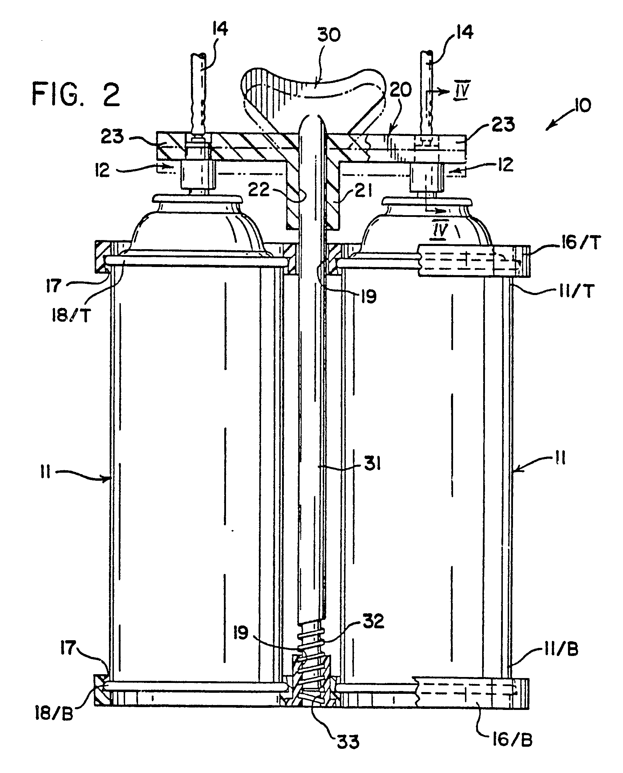

Gemäß der Darstellung in den Fig. 1 und 2 liegt die Handhabe 30 unmittelbar neben dem T-förmigen Bügel 20. Das Ende der Welle 31 der Handhabe bildet eine Spindel 32. Die Spindel 32 wirkt mit einem Gewinde 33 in der Mittelbohrung 19 der Zwinge 16/B zusammen.

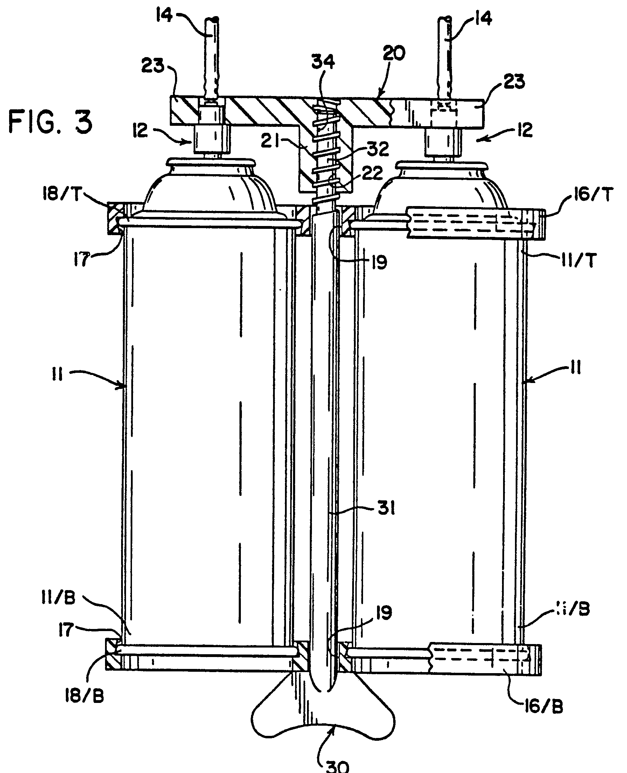

Gemäß der Darstellung der Fig. 3 ist, die Handhabe 30 unmittelbar neben der Zwinge 16/B angeordnet. Die Spindel 32, auf der Welle der Handhabe wirkt mit einem Gewinde 34 in der Hülsenbohrung 22 des T-förmigen Bügels 20 zusammen.

In jeder Ausführungsform der Erfindung dienen die Außen- und Innengewinde 32, 33 bzw. 32, 34 der Spindel bei einer Drehung der Welle 31 mit der Handhabe dazu den T-förmigen Bügel 20 in Richtung auf die Zwinge 16/T zu bewegen, um die Druckdosenventile 12 gleichmäßig zu öffnen. Eine Drehung der Welle 31 in der entgegengesetzten Richtung schließt dagegen die Druckdosenventile 12 ebenso gleichmäßig.

Gemäß der Darstellung der Fig. 5 dient die Spritzpistole zur Durchflußkontrolle der Schaumkomponenten durch die Verschlauchung 14 zur Abgabedüse 15, wenn die Druckdosenventile 12 durch eine Drehung der Handhabe 30 geöffnet worden sind, was allgemein bei 35 dargestellt ist. Diese Steuereinrichtung 35 besteht aus einer Walze 36 mit Achsstummeln 37, welche mit inneren Führungen 38 zusammenwirken. Die Führungen 38 sind einteilig in den parallelen Wänden eines U-förmigen Gehäuses 39 ausgebildet. Der Boden des Gehäuses 39 hat eine Rampen- oder Schrägfläche 40. Eine Drehung der Walze 36 in Richtung der Düse 15 quetscht oder klemmt die Verschlauchung 14 bis zur Unterbrechung der Abgabe der Schaumkomponenten durch die Düse 15.

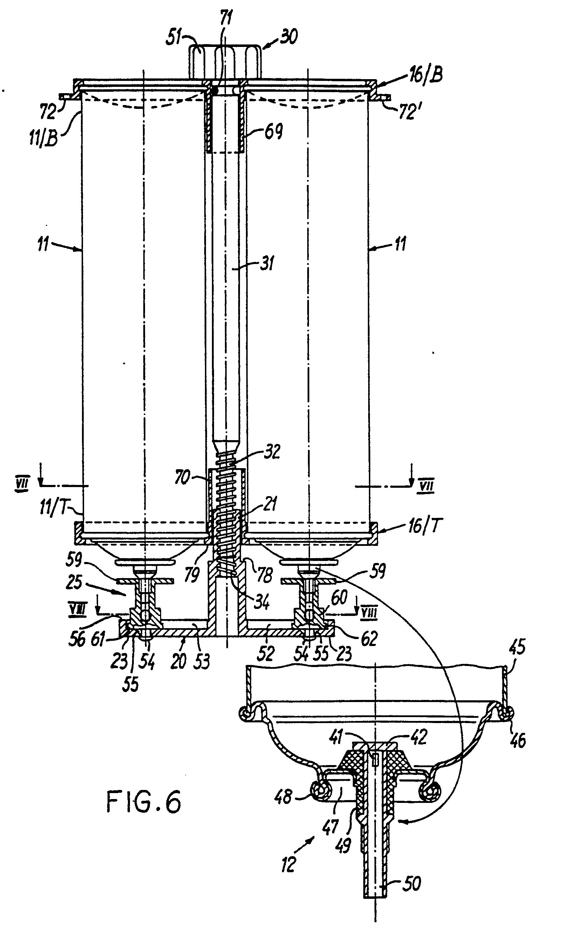

Die Ausführungsformen nach den Fig. 1 bis 3 bedingen die Abstützung der von der Spindel 32 über die Hülse 21 auf den Bügel 20 übertragenen Drehmomente mit den Ventilbetätigungshülsen 25 und den Ventilstangen, welche normalerweise den Ventilkörper bilden. Beispielsweise ist ein solches Ventil in der Darstellung der Fig. 6 vergrößert herausgezeichnet. Danach sitzt auf dem zylindrischen Mantel 45 der Dose der aufgekrimpte Rand 46 des in der Mitte mit einer Öffnung versehenen Dosendeckels. In diese Öffnung ist das tellerartige Ventilgehäuse 47 eingesetzt und durch seinen aufgekrimpten Rand 48 festgelegt. Im Ventilgehäuse sitzt eine Gummidichtung 49, welche das Rohr 50, welches die Ventilstange bildet, umschließt. Das Rohr 50 weist dosenseitig eine oder mehrere Aussparungen 41 im Rohrmantel auf und dichtet mit einem Innendeckel 42 auf der Gummidichtung ab.

Diese und andere bekannte Dosenabgabeventilbauformen geben den Austrittsquerschnitt bei hinreichend großen axialen und/oder Kippbewegungen der Ventilstange frei. Da die Qualität des Schaumes entscheidend von der volumengleichen Abgabe der Komponenten aus den beiden Abgabeventilen 12 der Druckdosen und die Abgabemengen ihrerseits von gleichen Ventilöffnungsbeträgen bestimmt werden, ist in der die bevorzugte Ausführungsform der Erfindung darstellenden Ausführungsart der Fig. 6 bis 9 eine ausschließlich axiale Betätigung der Ventilstangen vorgesehen. Das setzt die Ausschaltung von Kippbewegungen voraus, wie sie u.a. durch die oben erläuterten Drehmomente ausgelöst werden.

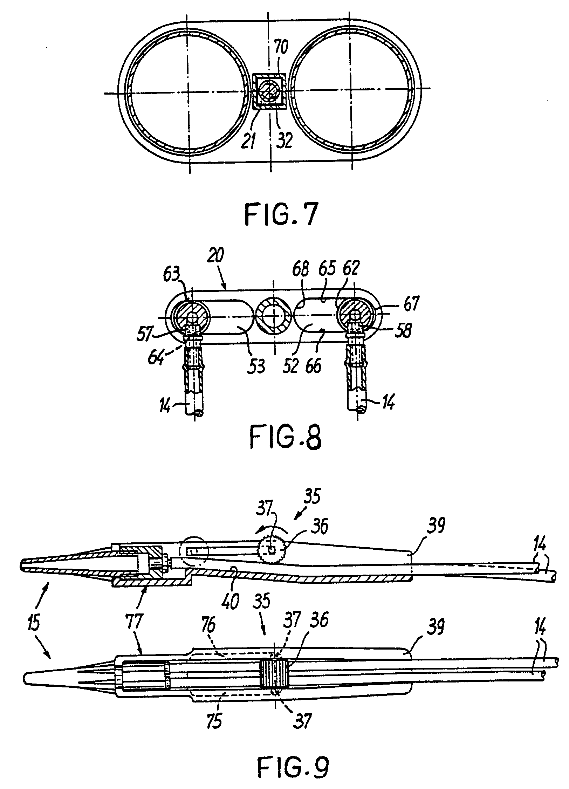

Zu diesem Zweck ist die Hülse 21 gegen Mitdrehen bei Betätigung der Handhabe 30, die in dieser Ausführungsform als Rändelkopf 51 ausgebildet ist, in der Aussparung 19 der spindelseitigen Zwinge 16/T gesichert. Infolgedessen kann bei Drehung der Spindel der Bügel 20 mit seinen Armen 23 axiale Bewegungen ausführen. Die Natur des für die Bügelfertigung verwendeten Kunststoffes schließt aber eine Durchbiegung der Arme nicht aus, die ihrerseits zu einer Kippbewegung an den Ventilbetätigungshülsen 23 führen würde. Da die Ventilbetätigungshülsen in Aussparungen 52, 53 der Bügelarme 23 sitzen und mit Hilfe von Druckknöpfen 54 in nach innen erweiterte Aussparungen 55 von der Unterseite 56 der Bügelarme 23 her eingerastet sind, ist eine Relativbewegung zwischen den Armen 23 und den Ventilbetätigungshülsen 25 ausgeschlossen. In diesem Fall ergeben sich die aus der Fig. 8 ersichtlichen seitlichen, d.h. radialen Schlauchanschlußrohre 57, 58, auf die die Eintrittsenden der Schläuche 14 aufgeschoben werden. Diese Anordnung der Schlauchanschlußrohre 57, 58 hat den Vorteil, daß bei Verpackung des Teilesatzes in der aus den Figuren hervorgehenden, mit den Druckdosen zusammengebauten Betriebslage die Schläuche bzw. die Schlauchanschlußrohre 57, 58 die Anordnung axial nicht verlängern, so daß die Lange der Verpackung kürzer ausfällt als bei den zuerst beschriebenen Ausführungsformen der Erfindung.

Die Ventilbetätigungshülsen 25 weisen an ihren freien Enden jeweils einen Teller 59 auf, der mit dem Bordrand 48 zusammenwirkt, wie er durch das aufgekrimpte Ventilgehäuse 47 entsteht. Die Teile 48 und 49 bilden damit einen Anschlag, der die Axialbewegung des Bügels 20 beim Öffnen des Ventiles begrenzt.

Am gegenüberliegenden Ende weist jede Ventilbetätigungshülse 25 einen Deckel 60 auf, dessen breite Außenfläche 61 sich auf dem Boden 43 der betreffenden Aussparung 52, 53 an dem jeweiligen Arm 23 abstützt. Im Zusammenwirken mit der Druckknopfanordnung 54 entsteht dadurch eine kippsichere Verbindung der Ventilbetätigungshülsen 25 mit den Armen 23 des Bügels 20. Der Deckel 60 hat ferner einen Deckelflansch 62, der kreisförmig ist, der jedoch (Fig. 8) je eine Abplattung 63, 64 aufweist. Diese beiden sich gegenüberliegenden Abplattungen 63 und 64 wirken mit je einer von zwei parallelen Längskanten 65, 66 der Aussparungen 52, 53 zusammen. Die Längskanten 65, 66 gehen in halbkreisförmige Verbindungskanten 67, 68 über, deren Krümmung der Krümmung des Deckelflansches 62 entspricht. Man kann dadurch Toleranzen ausgleichen, indem man für unterschiedliche Druckdosenabmessungen die gleichen Bügel vorsieht, aber die Aussparungen 55 für die Druckknöpfe 54 in entsprechendem Abstand vorsieht.

Bei der bevorzugten Ausführungsform der Erfindung ist für die Welle 31 der Handhabe 51 in den Zwingenbacken 16/B bzw. 16/T je eine Führungsbüchse 69 bzw. 70 vorgesehen. Die Führungsbüchse 69 ist rohrförmig und führt das ihr zugeordnete Ende der Welle 31, die durch einen radial angeordneten Stift 71 axial fixiert ist, während die Führungsbüchse 70 (Fig. 7) einen mehreckigen, gemäß dem dargestellten Ausführungsbeispiel einen quadratischen Umriß aufweist. Diese der Spindel 32 zugeordnete Führungsbüchse 70 gibt die Außenkontur der mit dem Innengewinde 34 versehenen Hülse 21 vor. Dadurch wird gleichzeitig eine Längsführung des Bügels 20 und eine dabei wirksame Verdrehsicherung durch die zugeordnete Zwinge 16/T erreicht.

Wie die Fig. 6 ferner zeigt, hat die Zwinge 16/B an gegenüberliegenden Seiten je eine Öse 72, 72', durch die Anschlüsse eines Tragegurtes mit dem Teilesatz verbunden werden können. Dadurch ergibt sich zwangsläufig die nach unten gerichtete Anordnung der Druckdosen und ihre Abgabeventile, welche für die Entleerung und die volumengleiche Abgabe der Komponenten die Voraussetzung bildet.

Gemäß der Fig. 9 ist die Walze 36 oberhalb einer schiefen Ebene der Spritzpistole 35 beiderseits in Hinterschneidungen geführt. Die gerändelte Walze kann durch Verschieben in den Hinterschneidungen zum Steuern der Durchflußmengen durch die Verschlauchung 14 bewegt werden. Die Abgabedüse 15 ist im Gehäuse 77 der Spritzpistole eingerastet und kann daher herausgenommen und weggeworfen werden, wenn das Gehäuse mit einer neuen Düse 15 versehen und weiter verwendet werden soll.

Normalerweise wird der Teilesatz zusammen mit den Druckdosen in der aus den Fig. 6 bis 8 hervorgehenden Betriebsbereitschaft zusammengebaut angeliefert. Einschließlich der bereits angebrachten Schläuche und der Spritzpistole befindet sich der Teilesatz mit den Druckdosen in einer Verpackung. Man kann aber die Teile auch einzeln anliefern. Zum Zusammenbau werden zunächst die Zwingen 16/B und 16/T, wie beispielsweise aus Fig. 6 hervorgeht, mit den Druckdosen zusammengebaut. Dann führt man die Welle 31 mit der Spindel 32 durch die Führungsbüchsen 69 und 70, bis der Rändelknopf 51, der die Handhabe 30 bildet, sich auf der Zwinge 16/B abstützt. Unter Drehung der Welle 31 führt man die Hülse 21 in die Aussparung der Hülse 70 ein, nachdem man vorher die Ventilbetätigungshülsen 25 befestigt hat. Das geschieht zunächst dadurch, daß man jede Ventilbetätigungshülse auf das zugeordnete Gewinde der Ventilbetätigungsstange 50 auf schraubt und dann die Druckknöpfe 54 in die Aussparung 55 der Arme 23 einrastet.

Ist die Vorrichtung auf diese Weise betriebsbereit gemacht, so kann nach Umhängen der Anordnung durch Betätigen des Rändelknopfes 51 der Bügel 20 angezogen werden, bis die Teller 59 auf den Bordrändern 48 aufliegen. Eine ungewollte Durchbiegung des Bügels verhindert ein Bordrand 78, welcher sich auf der Außenseite 79 der Zwinge 16/T abstützt, sobald die Teller 59 die Bordränder 48 erreicht haben. Die Abgabe der Komponenten in die Verschlauchung 14 kann jederzeit unterbrochen werden, indem die Rändelschraube 51 in umgekehrter Richtung so weit gedreht wird, daß die Ventilbetätigungshülsen 25 die Ventilrohre 50 in ihre Ausgangsstellung zurückführen.

Während einer Öffnung der Ventile mit gegebenenfalls auf den Bordrändern 48 aufliegenden Tellern 59 kann der Ausfluß der Komponenten aus der Spritzpistole jeweils durch Betätigung der Rändelwalze gedrosselt bzw. ganz unterbrochen werden.

## Patentansprüche

1. Teilesatz für Mehrkomponenten-Polyurethanschäume, wobei die Komponenten in zwei jeweils ein nach außen vorstehendes Abgabeventil (12) im Deckel (11/T) aufweisenden Druckdosen (11) untergebracht sind, mit einer Halterung (10), bei der zwei parallele Zwingenbacken (16/T, 16/B), welche die beiden Druckdosen (11) jeweils am Boden (11/B) und am Deckel (11/T) nebeneinanderhalten, vorgesehen sind, mit einer Spritzpistole (35) und einer Steuerung (36) als Durchflußkontrolle für die Schaumkomponenten durch Schlauche (14) bei geöffneten Abgabeventilen (12), die mit einer Handhabe (30) gleichzeitig geöffnet werden,

4

dadurch gekennzeichnet, daß jede Zwingenbacke (16/T, 16/B) zwei kreisförmige Hinterschneidungen (17) zur kraft- und formschlüssigen Verbindung der Bordränder (18/T, 18/B) der beiden Druckdosen (11) sowie zwischen ihren Hinterschneidungen je eine Aussparung (19) für eine parallel zu den Druckdosen (11) in den Aussparungen (19) der Zwingenbacken (16/T, 16/B) verlaufende Welle (31) aufweist, wobei an einem Ende der Welle die Handhabe (30) sitzt, die an der den Böden (11/B) der Druckdosen (11) zugeordneten Zwingenbacke (16/B) anliegt, durch die die Welle (31) verläuft, welche an ihrem der Handhabe (30) entgegegesetzten Ende eine mit Außengewinde versehene Spindel (32) aufweist, die in ein Innengewinde (33) in einer Hülse (21) eines T-förmigen Bügels (20) eingreift, der zum Verbinden mit den Abgabeventilen (12) Ventilbetätigungshülsen (25) und zum Anschließen der Schläuche (14) Anschlußrohre (29) aufweist, die jeweils in den seitlichen Armen (23) des T-förmigen Bügels (20) untergebracht sind, wobei je nach Drehrichtung der auf der Welle (31) angeordneten Spindel (32) der T-förmige Bügel (20) in Richtung auf die den Deckeln (11/T) der Dosen (11) zugeordnete, benachbarte Zwingenbacken (16/T) zum gleichzeitigen Öffnen der Abgabeventile (12) oder in umgekehrter Richtung zum Zurückführen der Abgabeventile (12) in ihre Ausgangsstellung bewegbar ist und wobei die Hülse (21) als Anschlag gegen die benachbarte Zwingenbacke (16/T) zur Begrenzung der Bewegung in Richtung auf diese Zwingenbacke dient.

2. Teilesatz für Mehrkomponenten-Polyurethanschaume, wobei die Komponenten in zwei jeweils ein nach außen vorstehendes Abgabeventil (12) im Deckel (11/T) aufweisenden Druckdosen (12) untergebracht sind, mit einer Halterung (10), bei der zwei parallele Zwingenbacken (16/T, 16/B), welche die beiden Druckdosen (11) jeweils am Boden (11/B) und am Deckel (11/T) nebeneinanderhalten, vorgesehen sind, mit einer Spritzpistole (35) und einer Steuerung (36) als Durchflußkontrolle für die Schaumkomponenten durch Schläuche (14) bei geöffneten Abgabeventilen (12), die mit einer Handhabe (30) gleichzeitig geöffnet werden, dadurch gekennzeichnet, daß jede Zwingenbacke (16/T, 16/B) zwei kreisförmige Hinterschneidungen (17) zur kraft- und formschlüssigen Verbindung der Bordränder (18/T, 18/B) der beiden Druckdosen (11) sowie zwischen ihren Hinterschneidungen je eine Aussparung (19) für eine parallel zu den Druckdosen (11) in den Aussparungen (19) der Zwingenbacken (16/T, 16/B) verlaufende Welle (31) aufweist, wobei an einem Ende der Welle die Handhabe (30) sitzt, die an einem T-förmigen Bügel (20) anliegt, der eine Hülse (21) aufweist, durch die die Welle (31) verläuft, welche an ihrem der Handhabe (30) entgegengesetzten Ende eine mit Außengewinde versehene Spindel (32) aufweist, die in ein Innengewinde (33) in der Aussparung (19) in der den Böden (11/B) der Dosen (11) zugeordneten Zwingenbacke (16/B) eingreift, wobei der T-förmige Bügel (20) zum Verbinden mit den Abgabeventilen (12) Ventilbetätigungshülsen (25) und zum Anschließen der Schläuche (14) Anschlußrohre (29) aufweist, die jeweils in den seitlichen Armen (23) des T-förmigen Bügels (20) untergebracht sind, wobei je nach Drehrichtung der auf der Welle (31) angeordneten Spindel (32) der T-förmige Bügel (20) in Richtung auf die den Deckeln (11/T) der Dosen (11) zugeordnete, benachbarte Zwingenbacke (16/T) zum gleichzeitigen Öffnen der Abgabeventile (12) oder in umgekehrter Richtung zum Zurückführen der Abgabeventile (12) in ihre Ausgangsstellung bewegbar ist und wobei die Hülse (21) als Anschlag gegen die benachbarte Zwingenbacke (16/T) zur Begrenzung der Bewegung in Richtung auf diese Zwingenbacke dient.

3. Teilesatz nach Anspruch 1, dadurch gekennzeichnet, daß die Hülse (21) gegen Mitdrehen bei Betätigung der Handhabe (30) in der Aussparung (19) der benachbarten Zwingenbacke (16/T) gesichert ist und daß die in Aussparungen (52, 53) der Bügelarme (23) einrastbaren Ventilbetätigungshülsen (25) seitliche Schlauchanschlußrohre (57, 58) besitzen und an ihren freien Enden in je einem mit einem Bordrand (48) des Abgabeventilgehäuses (47) zusammenwirkenden Teller, sowie am gegenüberliegenden Ende einen Deckel (60) aufweisen, dessen Außenfläche (61) sich in der Aussparung (52, 53) auf dem betreffenden Arm (23) des Bügels (20) abstützt und dessen Deckelflansch (62) sich an den Aussparungsrändern (65, 66) führt.

4. Teilesatz nach Anspruch 1 oder 3, dadurch gekennzeichnet, daß für die Welle (31) der Handhabe (30) in den Zwingenbacken (16/B, 16/T) je eine Führungsbüchse (69, 70) vorgesehen ist und die der Spindel (32) zugeordnete Führungsbüchse (70) eine mehreckige Querschnittsform, der die Außenkontur der mit dem Innengewinde (34) versehenen Hülse (21) entspricht, zur gleichzeitigen Längsführung und Verdrehsicherung des Bügels (20) in der ihm benachbarten Zwingenbacke (16/T) aufweist.

5. Teilesatz nach einem der Ansprüche 1 bis 4, dadurch gekennzeichnet, daß die die Deckel (60) der auf die Abgabeventile (12) aufschraubbaren Ventilbetätigungshülsen (25) aufnehmenden Aussparungen (52, 53) in der Unterseite (56) der Arme (23) des Bügels (20) ausgebildet sind und parallele Längskanten (65, 66) zur Führung und Abplattungen (63, 64) der Deckelflansche (62) und gekrümmte Verbindungskanten (67, 68) bei sonst runder Formgebung der Deckelflansche aufweisen.

6. Teilesatz nach einem der Ansprüche 1 bis 5, dadurch gekennzeichnet, daß die den Dosenböden zugeordnete Zwingenbacke (16/B) an gegenüberliegenden Seiten je eine Öse (71, 72) für einen Traggurt aufweist.

7. Teilesatz nach einem der Ansprüche 1 bis 6, dadurch gekennzeichnet, daß die Spritzpistole (35) eine zur Steuerung der Durchflußmenge durch die Schläuche (14) dienende Räumwalze (36) aufweist, die gegenüber einer schiefen Ebene (40) in Hinterschneidungen (75, 76) des Spritzpistolengehäuses geführt ist, und daß die Düse (15) der Spritzpistole formschlüssig in das Spritzpistolengehäuse (77) eingesetzt ist.

## Claims

1. Sub-assembly for multi-component polyurethane foams, wherein the components are housed in two pressurised cylinders (11) each having an outwardly projecting outlet valve (12) in the cover (11/T), with a holder (10) in which two parallel clamp jaws (16/T, 16/B) are provided which hold the two pressurised cylinders (11) adjacent to one another respectively on the floor (11/B) and on the cover (11/T), with a spray gun (35) and a control means as a control for the flow of foam components through flexible tubes (14) with open outlet valves (12), which are opened by a handle (30) simultaneously, characterised in that each clamp jaw (16/T, 16/B) has two circular undercuts (17) for gravitational and interlocking connection of the rim edges (18/T, 18/B) of the two pressurised cylinders (11) as well as a respective recess (19) between its undercuts for a shaft (31) running parallel to the pressurised cylinders (11) in the recesses (19) of the clamp jaws (16/T, 16/B), wherein the handle (30) is at one end of the shaft which bears on the clamp jaw (16/B) attached to the floor (11/B) of the pressurised cylinder (11), through which the shaft (31) runs, which has a spindle (32) provided with an external screwthread on its end opposite the handle (30), which engages in an inner screwthread (33) in a sleeve (21) of a T-shaped strap (20) which has valve operating sleeves (25) for connection with the outlet valves (12) and connection pipes (29) for connection of the flexible tubes (14), which are respectively housed in the side arms (23) of the T-shaped strap (20), whereby according to the direction of rotation of the spindle (32) arranged on the shaft (23) the T-shaped strap (20) is movable in the direction of the neighbouring clamp jaws (16/T) attached to the covers (11/T) of the cylinders (11) for the simultaneous opening of the outlet valves (12) or in the reverse direction for restoring the outlet valves (12) to their output position and whereby the sleeve (21) serves as a stop for the neighbouring clamp jaw (16/T) for limiting the movement in the direction of this clamp jaw.

2. Sub-assembly for multi-component polyurethane foams, wherein the components are housed in two pressurised cylinders (11) each having an outwardly projecting outlet valve (12) in the cover (11/T), with a holder (10) in which two parallel clamp jaws (16/T, 16/B) are provided which hold the two pressurised cylinders (11) adjacent to one another respectively on the floor (11/B) and on the cover (11/T), with a spray gun (35) and a control means as a control for the flow of foam components through flexible tubes (14) with open outlet valves (12), which are opened by a handle (30) simultaneously, characterised in that each clamp jaw (16/T, 16/B) has two circular undercuts (17) for gravitational and interlocking connection of the rim edges (18/T, 18/B) of the two pressurised cylinders (11) as well as a respective recess (19) between its undercuts for a shaft (31) running parallel to the pressurized cylinders (11) in the recesses (19) of the clamp jaws (16/T, 16/B), wherein the handle (30) is at one end of the shaft which bears on a T-shaped strap (20), which has a sleeve (21) through which the shaft (31) runs, which has a spindle (32) provided with an external screwthread on its end opposite the handle (30), which engages in an inner screwthread (33) in the recess (19) of the clamp jaw (16/B) attached to the floor (11/B) of the cylinders (11), wherein the T-shaped strap (20) has valve operating sleeves (25) for connection with the outlet valves (12) and connection pipes (29) for connection of the flexible tubes (14), which are respectively housed in the side arms (23) of the T-shaped strap (20), whereby according to the direction of rotation of the spindle (32) arranged on the shaft (23) the T-shaped strap (20) is movable in the direction of the neighbouring clamp jaws (16/T) attached to the covers (11/T) of the cylinders (11) for the simultaneous opening of the outlet valves (12) or in the reverse direction for restoring the outlet valves (12) to their output position and whereby the sleeve (21) serves as a stop for the neighbouring clamp jaw (16/T) for limiting the movement in the direction of this clamp jaw.

3. Sub-assembly according to claim 1, characterised in that the sleeve (21) is secured against co-rotation on operation of the handle (30) in the recess (19) of the neighbouring clamp jaw (16/T) and that the valve operating sleeves (25) which can be caught in recesses (52, 53) of the strap arms (23) have side tube connection pipes (57, 58) and have a cover (60) at their free ends in each plate cooperating with a rim edge (48) of the outlet valve housing (47), as well as on the opposite side, whose outer surface (61) is supported in the recess (52, 53) on the respective arm (23) of the strap (20) and whose cover flange (62) is guided on the recess edges (65, 66).

4. Sub-assembly according to claim 1 or 3, characterised in that a respective guide bush (69, 70) is provided for the shaft (31) of the handle (30) in the clamp jaws (16/B, 16/T) and the guide bush (20) attached to the spindle (32) has a polygonal cross-sectional shape, which corresponds to the outer shape of the sleeve (21) provided with the inner screwthread (34) for simultaneous longitudinal guiding and distortion protection of the strap (20) in its neighbouring clamp jaw (16/T).

5. Sub-assembly according to one of claims 1 to 4, characterised in that the recesses (52, 53) taking up the cover (60) of the valve operating sleeves (25), which can be screwed onto the outlet valves (12), are formed in the underside (56) of the arms (23) of the strap (20) and have parallel longitudinal edges (65, 66) for guiding and flattenings (63, 64) of the cover flange (62) and curved connection edges (67, 68) with otherwise round shaping of the cover flange.

6. Sub-assembly according to one of claims 1 to 5, characterized in that the clamp jaw (16/B) attached to the cylinder floor has on opposite sides a respective eyelet (71, 72) for a shoulder strap.

7. Sub-assembly according to one of claims 1 to 6, characterised in that the spray gun (35) has a level controlling roller (36) for controlling the flow quantity through the flexible tubes (14), which is guided opposite an inclined plane (40) in undercuts (75, 76) of the spray gun housing, and that the nozzle (15) of the spray gun is inserted positively into the spray gun housing.

**Revendications**

1. Assemblage pour réaliser un appareil producteur de mousses de polyuréthane à plusieurs composants contenus dans deux boîtes sous pression (11), pourvues chacune d'une soupape de débit (12) montée en saillie dans le couvercle (11/T) de la boîte; comportant une monture (10) à deux éléments de serrage (16/T, 16/B) pour recevoir les deux boîtes sous pression (11) maintenues côte à côte par le fond (11/B) et par le couvercle (11/T), ainsi qu'un pistolet d'injection (35) et un système de réglage (36) pour faire varier le débit des composants de la mousse dans des tuyauteries (14), lorsque les soupapes de débit (12) ont été mises simultanément en position d'ouverture par un organe de commande manuelle (30); caractérisé en ce que chaque élément de serrage (16/T, 16/B) du support comporte deux échancrures (17), prévues pour s'emboîter avec un effet de retenue sur les bords (18/T, 18/B) du corps de chacune des boîtes sous pression (11), un trou (19) étant prévu entre les deux échancrures de chaque élément du support pour le passage d'une tige rotative de commande (31), montée dans les trous (19) des deux éléments (16/T, 16/B) parallèlement aux deux boîtes sous pression (11); une extrémité de la tige de commande (31) portant l'organe de commande manuelle (30), monté en appui sur l'élément (16/B) du support qui correspond aux fonds (11/B) des boîtes sous pression (11), et à travers lequel passe la tige de commande (31); celle-ci présentant à l'opposé de l'organe de commande manuelle (30) une extrémité filetée (32), engagée dans un filetage intérieur (33) prévu dans une douille (21) solidaire d'un étrier (20) en forme de T, qui porte des douilles d'actionnement (25) associées aux soupapes de débit (12) et des embouts tubulaires (29) pour le raccordement des tuyauteries (14); ces douilles d'actionnement et ces embouts tubulaires étant disposés sur des bras latéraux (23) de l'étrier (20) en forme de T; le système étant tel que, suivant le sens dans lequel on fait tourner l'extrémité filetée (32) de la tige de commande (31), l'étrier (20) en forme de T se déplace en se rapprochant de l'élément (16/T) du support des boîtes (11) qui est associé aux couvercles (11/T) de celles-ci, pour assurer l'ouverture simultanée des soupapes de débit (12), ou se déplace dans l'autre sens, pour laisser les soupapes de débit (12) revenir en position initiale de fermeture; la douille (21) portée par l'étrier (20) en forme de T servant de butée contre l'élément adjacent (16/T) du support, pour limiter le mouvement de rapproche ment de l'étrier (20) par rapport à cet élément.

2. Assemblage pour réaliser un appareil producteur de mousses de polyuréthane à plusieurs composants contenus dans deux boîtes sous pression (11), pourvues chacune d'une soupape de débit (12) montée en saillie dans le couvercle (11/T) de la boîte; comportant une monture (10) à deux éléments de serrage (16/T, 16/B) pour recevoir les deux boîtes sous pression (11) maintenues côte à côte par le fond (11/B) et par le couvercle (11/T), ainsi qu'un pistolet d'injection (35) et un système de réglage (36) pour faire varier le débit des composants de la mousse dans des tuyauteries (14), lorsque les soupapes de débit (12) ont été mises simultanément en position d'ouverture par un organe de commande manuelle (30); caractérisé en ce que chaque élément de serrage (16/T, 16/B) du support comporte deux échancrures (17) prévues pour s'emboîter avec un effet de retenue sur les bords (18/T, 18/B) du corps de chacune des boîtes sous pression (11), un trou (19) étant prévu entre les deux échancrures de chaque élément du support pour le passage d'une tige rotative de commande (31) montée dans les trous (19) des deux éléments (16T, 16/B), parallèlement aux deux boîtes sous pression (11); une extrémité de la tige de commande (31) portant l'organe de commande manuelle (30) monté en appui sur un étrier (20) en forme de T, lequel porte une douille (21) que traverse la tige de commande (31); celle-ci présentant à l'opposé de l'organe de commande manuelle (30) une extrémité filetée (32) engagée dans un filetage intérieur (33) prévu dans le trou (19) de l'élément de serrage (16/B) qui est associé aux fonds (11/B) des boîtes sous pression (11); l'étrier (20) en forme de T portant des douilles d'actionnement (25) associées aux soupapes de débit (12) et des embouts tubulaires (29) pour le raccordement des tuyauteries (14), ces douilles d'actionnement et ces embouts tubulaires étant disposés sur des bras latéraux (23) de l'étrier (20) en forme de T; le système étant tel que, suivant le sens dans lequel on fait tourner l'extrémité filetée (32) de la tige de commande (31), l'étrier (20) en forme de T se déplace en se rapprochant de l'élément de serrage (16/T) du support des boîtes qui est associé aux couvercles (11/T) de celles-ci, pour assurer l'ouverture simultanée des soupapes de débit (12), ou se déplace dans l'autre sens, pour laisser les soupapes de débit (12) revenir en position initiale de fermeture; la douille (21) portée par l'étrier (20) en forme de T servant de butée contre l'élément adjacent (16/T) du support, pour limiter le mouvement de rapprochement de l'étrier (20) par rapport à cet élément.

3. Assemblage conforme à la revendication 1, caractérisé en ce que la douille (21) est retenue en rotation, dans le trou de passage (19) de l'élément de serrage (16/T) adjacent à l'organe de commande manuelle (30), pour empêcher la douille (21) d'être entraînée en rotation par l'organe de commande (30); et en ce que les douilles d'actionnement (25) des soupapes (12), fixées par emboîtement élastique dans des évidements (52, 53) des bras (23) de l'étrier (20) portent des embouts tubulaires (57, 58) disposés latéralement pour le raccordement des tuyauteries (14), et sont pourvues chacune à leur extrémité libre, d'une collerette adaptée à coopérer avec une bordure (48) du corps de la soupape de débit correspondante (12); les douilles d'actionnement (25) portant en outre, à leur extrémité opposée, un couvercle (60) dont la face extérieure est en appui contre le fond de l'évidement (52, 53) ménagé dans le bras correspondant (23) de l'étrier (20), le bord (62) de ce couvercle (60) étant guidé contre les bords (65, 66) de l'évidement (52, 53).

4. Assemblage conforme à l'une des revendications 1 ou 3, caractérisé en ce que chacun des éléments de serrage (16/B, 16/T) du support est pourvu d'une douille de guidage (69, 70) peur la tige (31) de l'organe de commande manuelle (30), la douille de guidage (70) associée à l'extrémité filetée (32) de la tige (31) présentant un passage de section polygonale, qui correspond au contour extérieur de la section transversale de la douille (21) pourvue d'un filetage intérieur (34), pour assurer un guidage en coulissement de l'étrier (20) dans l'élément de serrage adjacent (16/T) du support, sans possibilité de rotation.

5. Assemblage conforme à l'une des revendications 1 à 4, caractérisé en ce que les évidements (52, 53) où viennent se loger les couvercles (60) des douilles d'actionnement (25) montées par vissage sur les soupapes de débit (12) sont ménagés dans la face inférieure (56) des bras (23) de l'étrier (20), ces évidements présentant des bords longitudinaux parallèles (65, 66) pour guider des méplats (63, 64) prévus sur les bords (62) des couvercles (60), ces bords longitudinaux (65, 66) aboutissant à des bords de liaison (67, 68) de forme ronde, correspondant à la forme générale ronde des bords (62) des couvercles (60).

6. Assemblage conforme à l'une des revendications 1 à 5, caractérisé en ce que l'élément de serrage (16/B) du support qui est associé aux fonds des boîtes sous pression porte de chaque côté un oeil de fixation (71, 72) pour les extrémités d'une sangle de suspension.

7. Assemblage conforme à l'une des revendications 1 à 6, caractérisé en ce que le pistolet d'injection (35) est pourvu d'un galet de réglage (36), pour faire varier le débit des composants de la mousse dans les tuyauteries (14), ce galet de réglage pouvant se déplacer en regard d'une face oblique (40) du corps (77) du pistolet en coulissant dans des rainures (75, 76) ménagées dans ce corps, et en ce que le gicleur de débit (15) du pistolet d'injection est monté et retenu par emboîtement élastique dans le corps (77) du pistolet d'injection.

FIG. 1

FIG. 2

FIG. 3

14

29

24

20

23

28

**FIG. 4**

25

26

12

27

II/T

36    35

37    38

36    14

15

40    39

**FIG. 5**

FIG.6

FIG. 7

FIG. 8

FIG. 9